# EUROPEAN PATENT APPLICATION

(11) **EP 4 550 497 A1**
(43) Date of publication of application: **07.05.2025**
(21) Application number: 24203423.9
(22) Date of filing: 29.09.2024
(51) Int. Cl.: H01M 10/04, H01M 50/107, H01M 50/188, H01M 50/528, H01M 50/533, H01M 50/538, H01M 50/55, H01M 50/559

(54) **CELL, BATTERY PACK, AND POWER CONSUMPTION DEVICE**

(30) Priority: 31.10.2023 CN 202311438259
(71) Applicant: BYD Company Limited, Shenzhen, Guangdong 518118 (CN)
(72) Inventor: Xu, Hang, Shenzhen, 518118 (CN); Jia, Xiaohui, Shenzhen, 518118 (CN); Tang, Wenlin, Shenzhen, 518118 (CN); Huang, Shan, Shenzhen, 518118 (CN); An, Yingrui, Shenzhen, 518118 (CN)
(74) Representative: Mathys & Squire

(57) **Abstract**

The present disclosure discloses a cell, a battery pack, and a power consumption device. The cell includes: a housing and a pole core. An accommodating cavity is formed in the housing, a battery post is arranged on an end of the housing, and the battery post is insulated from the housing. The pole core is mounted in the accommodating cavity. A first tab and a second tab are arranged on an end of the pole core corresponding to the battery post, the first tab is conductively connected to the battery post, the second tab is electrically connected to the housing, a thickness of the first tab is H1, a thickness of the second tab is H2, a circle in which an extended position of the first tab is located is a first circle, a circle in which an extended position of the second tab is located is a second circle, the first circle and the second circle are concentrically arranged, a radius of the first circle is r1, a radius of the second circle is r2, and the cell satisfies: π*(H1*r1+H2*r2)≥6.6 mm². Therefore, the cell can have a good overcurrent capability, and heat collection caused by an insufficient flow area is avoided, thereby improving the service life of the cell.

## Description

### FIELD

The present disclosure relates to the field of battery technologies, and specifically, to a cell, a battery pack, and a power consumption device.

### BACKGROUND

In a related art, a cylindrical battery pack includes a pole core and a housing. A positive electrode plate and a negative electrode plate are arranged on a same end of the pole core. The positive electrode plate and the negative electrode plate are arranged symmetrically in a radial direction of the pole core. A battery post is arranged on the housing. The positive electrode plate is electrically connected to the housing through a bus plate. The negative electrode plate is electrically connected to the battery post through the bus plate and is separated from the positive electrode plate through an insulating plate. Due to size limitations, the positive electrode plate and the negative electrode plate are usually small, and heat is easily collected due to an insufficient overcurrent area, resulting in damage to the cylindrical battery.

### SUMMARY

The present disclosure aims to resolve at least one of the technical problems existing in the related art. To this end, an objective of the present disclosure is to propose a cell with a good overcurrent capability, which can avoid heat collection and has long service life.

The cell according embodiments of the present disclosure includes: a housing, an accommodating cavity being formed in the housing, a battery post being arranged on an end of the housing, and the battery post being insulated from the housing; and a pole core, mounted in the accommodating cavity, a first tab and a second tab being arranged on an end of the pole core corresponding to the battery post, the first tab being conductively connected to the battery post, the second tab being electrically connected to the housing, a thickness of the first tab being H1, a thickness of the second tab being H2, a circle in which an extended position of the first tab is located being a first circle, a circle in which an extended position of the second tab is located being a second circle, the first circle and the second circle being concentrically arranged, a radius of the first circle being r1, a radius of the second circle being r2, and the cell satisfying: π*(H1*r1+H2*r2)≥6.6 mm².

According to the cell in the embodiments of the present disclosure, the cell is set to satisfy the above relational expression, so that the cell can have a good overcurrent capability, and heat collection caused by an insufficient flow area is avoided, thereby improving the service life of the cell.

According to the cell in some embodiments of the present disclosure, the first tab is a multi-layer structural member, a thickness of a single layer of the first tab is e1, a quantity of layers of the first tab is d1, and the thickness H1 of the first tab is e1*d1; and/or the second tab is a multi-layer structural member, a thickness of a single layer of the second tab is e2, a quantity of layers of the second tab is d2, and the thickness H2 of the second tab is e2*d2.

According to the cell in some embodiments of the present disclosure, d1 ranges from 5 to 30, and/or d2 ranges from 5 to 30.

According to the cell in some embodiments of the present disclosure, when the first tab is a negative electrode, the cell satisfies: π*H1*r1≥2.6 mm²; or when the first tab is a positive electrode, the cell satisfies: π*H1*r1≥4 mm².

According to the cell in some embodiments of the present disclosure, a winding center hole is formed in the pole core, the extended position of the first tab is located on an outer side of the winding center hole in a radial direction, and the first tab at least partially covers the winding center hole.

According to the cell in some embodiments of the present disclosure, a radius of the winding center hole is r, an extension length of the first tab is L1, and L1 satisfies: r1-0.5r≤L1≤r+r1.

According to the cell in some embodiments of the present disclosure, a radius of the winding center hole is r, and r satisfies: r1≥2r.

According to the cell in some embodiments of the present disclosure, the cell further includes: a current collecting disk. The current collecting disk is sandwiched between the housing and an end portion of the pole core, the first tab is located on a side of the second tab close to a center of the pole core, an avoiding through hole is formed in a middle portion of the current collecting disk, the first tab passes through the avoiding through hole and is conductively connected to the battery post, and the current collecting disk is conductively connected to the second tab and the housing respectively.

According to the cell in some embodiments of the present disclosure, a connecting protrusion protruding toward the housing is arranged on a first side wall of the current collecting disk, and the connecting protrusion is conductively connected to the housing.

According to the cell in some embodiments of the present disclosure, an avoiding space is provided between the first side wall of the current collecting disk and an inner wall of the housing, a through hole is provided on the current collecting disk, and the second tab extends into the avoiding space through the through hole and is conductively connected to the first side wall.

According to the cell in some embodiments of the present disclosure, a part of the second tab conductively connected to the first side wall is located on a side of the through hole facing away from the center of the pole core.

According to the cell in some embodiments of the present disclosure, a radius of the pole core is R, a thickness of the current collecting disk is D, an extension length of the second tab is L2, and L2 satisfies: 3.5 mm≤L2≤R-r2+D.

According to the cell in some embodiments of the present disclosure, a protruding height of the connecting protrusion is f, and f satisfies: f≥H2+0.5 mm.

According to the cell in some embodiments of the present disclosure, a thickness of the connecting protrusion ranges from 2 mm to 3 mm.

According to the cell in some embodiments of the present disclosure, the cell further includes an insulating spacer. The insulating spacer is arranged between the first tab and the avoiding through hole to insulate and separate the first tab from the current collecting disk.

According to the cell in some embodiments of the present disclosure, a radius of the avoiding through hole is r3, and r3 satisfies: r1+g≤r3≤r2-k. 2 mm≤g≤3 mm, and 2 mm≤k≤5 mm.

According to the cell in some embodiments of the present disclosure, a plurality of first tabs are arranged at intervals in a circumferential direction of the pole core. A plurality of second tabs are arranged at intervals in the circumferential direction of the pole core.

According to the cell in some embodiments of the present disclosure, a radian of each first tab ranges from 0.35 rad to 0.45 rad; and/or a radian of each second tab ranges from 0.35 rad to 0.45 rad.

The present disclosure further provides a battery pack.

The battery pack according to the embodiments of the present disclosure includes the cell according to any one of the foregoing embodiments and a housing. The cell is arranged in the housing.

The present disclosure further provides a power consumption device.

The power consumption device according to the embodiments of the present disclosure includes: the battery pack according to any one of the foregoing embodiments or the cell according to any one of the foregoing embodiments, and a power consumption body. The battery pack or the cell is arranged in the power consumption body.

Compared to the related art, advantages of the battery pack, the power consumption device, and the cell are the same. Details are not described herein again.

The additional aspects and advantages of the present disclosure will be set forth in part in the description below, parts of which will become apparent from the description below, or will be understood by the practice of the present disclosure.

### BRIEF DESCRIPTION OF THE DRAWINGS

The foregoing and/or additional aspects and advantages of the present disclosure become obvious and easily understood in descriptions of the embodiments with reference to the following accompanying drawings.
FIG. 1 is a cross-sectional view of a cell according to an embodiment of the present disclosure;
FIG. 2 is an exploded view of a cell according to an embodiment of the present disclosure;
FIG. 3 is a schematic diagram of a pole core according to an embodiment of the present disclosure; and
FIG. 4 is a schematic diagram of mounting of a pole core and a current collecting disk according to an embodiment of the present disclosure.

In the drawings:
Cell 100,
housing 1, main body part 11, welding groove 111, cover plate part 12, battery post 13,
pole core 2, first tab 21, second tab 22, winding center hole 23,
current collecting disk 3, first side wall 3a, avoiding through hole 31, connecting protrusion 32, through hole 33, avoiding space 4, insulating spacer 5, and insulating sleeve 6.

### DETAILED DESCRIPTION

Detail description of the embodiments of the present disclosure will be made in the following, and examples of the embodiments are shown in the accompanying drawings, throughout which identical or similar elements or elements of identical or similar functions are represented with identical or similar reference numerals. The embodiments that are described with reference to the accompanying drawings are exemplary, and are only used to interpret the present disclosure, instead limiting the present disclosure.

The following describes a cell 100 according to the embodiments of the present disclosure with reference to the accompanying drawings.

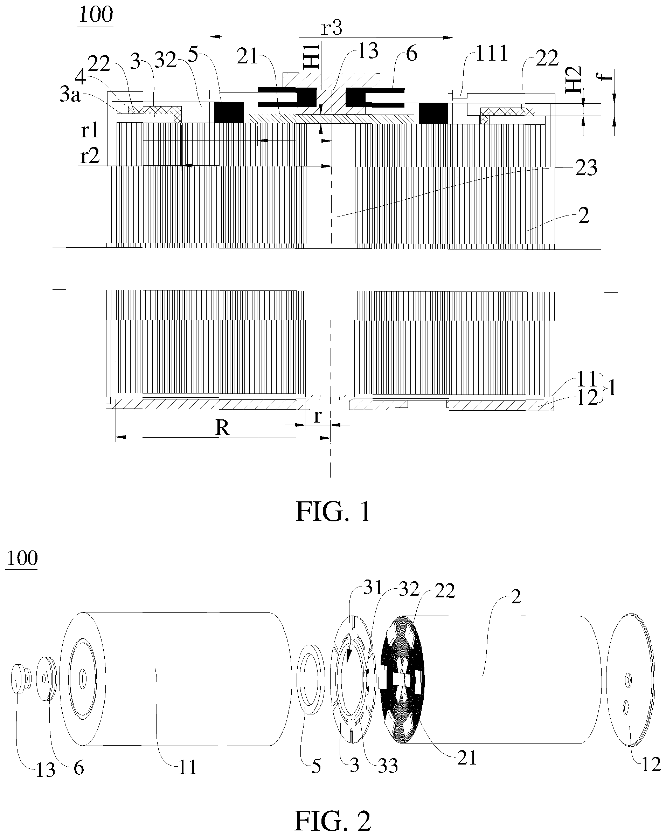

As shown in FIG. 1 to FIG. 4, the cell 100 according to the embodiments of the present disclosure includes: a housing 1 and a pole core 2. An accommodating cavity is formed in the housing 1, a battery post 13 is arranged on an end of the housing 1, and the battery post 13 is insulated from the housing 1. The pole core 2 is mounted in the accommodating cavity. A first tab 21 and a second tab 22 are arranged on an end of the pole core 2 corresponding to the battery post 13, the first tab 21 is conductively connected to the battery post 13, the second tab 22 is electrically connected to the housing 1, a thickness of the first tab 21 is H1, a thickness of the second tab 22 is H2, a circle in which an extended position of the first tab 21 is located is a first circle, a circle in which an extended position of the second tab 22 is located is a second circle, the first circle and the second circle are concentrically arranged, a radius of the first circle is r1, a radius of the second circle is r2, and the cell 100 satisfies: π*(H1*r1+H2*r2)≥6.6 mm².

Therefore, the cell 100 can have a good overcurrent capability, and heat collection caused by an insufficient flow area is avoided, thereby improving service life of the cell 100.

For example, referring to FIG. 1 to FIG. 4, the cell 100 includes a housing 1. The housing 1 includes a main body part 11 and a cover plate part 12. The main body part 11 is constructed as a cylinder. The accommodating cavity with an open end is formed in the main body part 11. The cover plate part 12 covers the main body part 11 and is configured to close the open end of the accommodating cavity. A battery post 13 is arranged on the other end of the main body part 11, the battery post 13 runs through the main body part 11 in an axial direction, and the battery post 13 is insulated from the main body part 11 through an insulating sleeve 6. One of the battery post 13 and the housing 1 leads out of the positive electrode and the other of the battery post 13 and the housing 1 leads out of the negative electrode.

The cell 100 further includes a pole core 2. The pole core 2 matches an accommodating cavity. The pole core 2 is configured to be mounted in the accommodating cavity. A first tab 21 and a second tab 22 are arranged on an end of the pole core 2 corresponding to the battery post 13. One of the first tab 21 and the second tab 22 is a positive tab and the other of the first tab 21 and the second tab 22 is a negative tab. An extended position of the first tab 21 (namely, a position protruding from a surface of the pole core 2) is located in a first circle, the first circle extends in a circumferential direction of the pole core 2, and the first tab 21 is configured to conductively connect to the battery post 13. An extended position of the second tab 22 is located in a second circle, the second circle extends in the circumferential direction of the pole core 2, and the second tab 22 is configured to conductively connect to the housing 1, so that one of the battery post 13 and the housing 1 is negatively charged and the other of the battery post 13 and the housing 1 is positively charged. Specifically, the second circle may be spaced on an outer side of the first circle in a radial direction; the second circle may be spaced on an inner side of the first circle in a radial direction; or the first circle may coincide with the second circle. This is not limited in the present disclosure.

A thickness of the first tab 21 may be set to H1, a thickness of the second tab 22 may be set to H2, a radius of the first circle may be set to r1, and a radius of the second circle may be set to r2. The cell 100 satisfies: π*(H1*r1+H2*r2)≥6.6 mm². Herein, it should be noted that, radii of the first circle and the second circle refer to radii from centers of circles in which the extended positions are located to inner side surfaces of corresponding tabs. The inner side surfaces are surfaces of sides of the tabs facing a center of the pole core 2.

Specifically, a formula I²R₁t=cmΔT is calculated according to a joule's law, and R₁=ρL/s. R₁ is a resistance of the tab, t is charging time, c is a specific heat capacity, m is mass, ΔT is temperature rise, and ρ is a resistivity. c_{Aluminum}=880 J/kg/°C, and c_{Copper}=390 J/kg/°C. ρ_{Aluminum}=2.83×10-5 Ω mm, and ρ_{Copper}=1.75×10-5 Ω mm. The cell 100 needs to satisfy a 1C fast charging current I=15A, and a relational expression meeting the overcurrent capability may be obtained through calculation: π*(H1*r1+H2*r2)≥6.6 mm².

It may be understood that, because the first tab 21 and the second tab 22 are in a ring-shaped structure and a quantity of tabs is relatively small, a product of π times and a sum of a product of the thickness H1 of the first tab 21 and the radius r1 of the first circle and a product of the thickness H1 of the second tab 22 and the radius r2 of the second circle is set to be greater than or equal to 6.6 mm², so that the cell 100 can have a good overcurrent capability, and heat collection caused by an insufficient flow area can be avoided, thereby improving the service life of the cell 100.

According to the cell 100 in the embodiments of the present disclosure, the cell 100 is set to satisfy the above relational expression, so that the cell 100 can have a good overcurrent capability, and heat collection caused by an insufficient flow area is avoided, thereby improving the service life of the cell 100.

In some embodiments of the present disclosure, the first tab 21 may be set to a plurality of turns of tabs. The plurality of turns of first tabs 21 are arranged in sequence in a radial direction of the pole core 2, radii of circles in which extended positions of the plurality of turns of first tabs 21 are located are r11, r12, r13, ... respectively, and the radius r1 of the first circle in which the extended position of the first tab 21 is located is (r11+r12+r13+...)/n. The second tab 22 is the same as the first tab 21. Details are not described herein again.

In some embodiments of the present disclosure, the first tab 21 is a multi-layer structural member, a thickness of a single layer of the first tab 21 is e1, a quantity of layers of the first tab 21 is d1, and the thickness H1 of the first tab 21 is e1*d1; and/or the second tab 22 is a multi-layer structural member, a thickness of a single layer of the second tab 22 is e2, a quantity of layers of the second tab 22 is d2, and the thickness H2 of the second tab 21 is e2*d2.

For example, the first tab 21 may be set to a multi-layer structural member. A thickness of a single layer of the first tab 21 is e1, and a quantity of layers of the first tab 21 is set to d1. The thickness H1 of the first tab 21 is a product of the thickness e1 of the single layer of the first tab 21 and the quantity d1 of layers of the first tab 21. In addition, the second tab 22 may be set to a multi-layer structural member. A thickness of a single layer of the second tab 22 is e2, and a quantity of layers of the second tab 22 is set to d2. The thickness H2 of the second tab 22 is a product of the thickness e2 of the single layer of the second tab 22 and the quantity d2 of layers of the second tab 22. In this way, the quantities of layers of the first tab 21 and the second tab 22 may be adjusted to change the thicknesses of the first tab 21 and the second tab 22, so as to adjust the overcurrent capability of the cell 100. It should be noted that larger thicknesses of the first tab 21 and the second tab 22 indicate a better overcurrent capability. This helps meet different operating conditions.

In some embodiments of the present disclosure, d1 ranges from 5 to 30, and d2 ranges from 5 to 30. For example, the quantity d1 of layers of the first tab 21 may be 10, the quantity d1 of layers of the first tab 21 may be 15, or the quantity d1 of layers of the first tab 21 may be 25. This is not limited in the present disclosure. The quantity d2 of layers of the second tab 22 may be 10, the quantity d2 of layers of the second tab 22 may be 15, or the quantity d2 of layers of the second tab 22 may be 25. This is not limited in the present disclosure.

Through the foregoing arrangement, an undesirable situation such as breakage of the tab caused by an excessively small quantity of layers during welding can be avoided, and a case that mounting of the tab is difficult due to an excessively large quantity of layers can be avoided, thereby improving design rationality of the cell 100.

In some embodiments of the present disclosure, when the first tab 21 is a negative electrode, the cell 100 satisfies: π*H1*r1≥2.6 mm²; or when the first tab 21 is a positive electrode, the cell 100 satisfies: π*H1*r1≥4 mm². Specifically, the first tab 21 may be set to the negative electrode, and the second tab 22 may be set to the positive electrode. In this case, the cell 100 satisfies: π*H1*r1≥2.6 mm² and π*H2*r2≥4 mm². Alternatively, the first tab 21 may be set to the positive electrode, and the second tab 22 may be set to the negative electrode. In this case, the cell 100 satisfies: π*H1*r1≥2.6 mm² and π*H2*r2≥4 mm². Through the foregoing arrangement, it can be ensured that both the first tab 21 and the second tab 22 have a sufficient overcurrent capability. This helps improve reliability of the cell 100.

In some embodiments of the present disclosure, a winding center hole 23 is formed in the pole core 2, the extended position of the first tab 21 is located on an outer side of the winding center hole 23 in a radial direction, and the first tab 21 at least partially covers the winding center hole 23. For example, referring to FIG. 1 to FIG. 4, the pole core 2 is formed by winding. A winding center hole 23 is formed in a middle portion of the pole core 2, the battery post 13 is opposite to the winding center hole 23, the first tab 21 is located on an outer side of the winding center hole 23 in a radial direction, and the first tab 21 falls inward to extend toward the winding center hole 23, so that at least a part of the first tab 21 covers the winding center hole 23, and the part of the first tab 21 covering the winding center hole 23 is opposite to the battery post 13 and is configured to weld and connect to the battery post 13, to implement a conductive connection between the first tab 21 and the battery post 13.

Through the foregoing arrangement, the first tab 21 can be positioned, to ensure that the first tab 21 can be in contact with the battery post 13 after the pole core 2 is mounted in the accommodating cavity, so that connection reliability between the battery post 13 and the first tab 21 is improved. In addition, during welding, a welding head needle may extend from the other end of the pole core 2 to the first tab 21 through the winding center hole 23 for welding. This helps reduce welding difficulty, and improves design rationality of the cell 100.

In some embodiments of the present disclosure, a radius of the winding center hole 23 is r, an extension length of the first tab 21 is L1, and L1 satisfies: 1-0.5r≤L1≤r+r1.

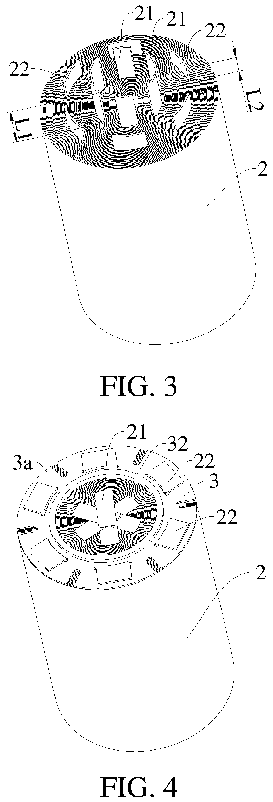

For example, referring to FIG. 1 and FIG. 3, the radius of the first circle in which the extended position of the first tab 21 is located may be set to r1, a radius of the winding center hole 23 may be set to r, an extension length of the first tab 21 may be set to L1, and L1 satisfies: r1-0.5r≤L1≤r+r1. In other words, the extension length L1 of the first tab 21 may be set to be greater than or equal to a difference between the radius r1 of the first circle and 0.5 times the radius r of the winding center hole 23, so that the first tab 21 and the winding center hole 23 have at least an overlapping size of 0.5r. In addition, the extension length L1 of the first tab 21 may be set to be less than or equal to a sum of the radius r1 of the first circle and the radius r of the winding center hole 23, so that the first tab 21 and the winding center hole 23 may exactly have an overlapping size of 2r.

Through the foregoing arrangement, it can be ensured that the first tab 21 and the winding center hole 23 have a sufficient overlapping area, to improve the connection stability between the first tab 21 and the battery post 13, and a case that the first tab 21 is excessively long can be avoided. This helps save materials, facilitates layout, and improves reliability of the cell 100.

In some embodiments of the present disclosure, a radius of the first circle is set to r1, a radius of the winding center hole 23 is set to r, and r satisfies: r1≥2r. In this way, a sufficient distance can be provided between the first tab 21 and the winding center hole 23, to ensure that the first tab 21 can have a sufficient bending space. This helps the first tab 21 be attached to an end surface of the pole core 2 and cover the winding center hole 23. Therefore, design rationality of the cell 100 is improved.

In some embodiments of the present disclosure, the cell 100 in the embodiments of the present disclosure further includes: a current collecting disk 3. The current collecting disk 3 is sandwiched between the housing 1 and an end portion of the pole core 2. The first tab 21 is located on a side of the second tab 22 close to a center of the pole core 2. An avoiding through hole 31 is formed in a middle portion of the current collecting disk 3, and the first tab 21 passes through the avoiding through hole 31 and is conductively connected to the battery post 13. The current collecting disk 3 is conductively connected to the second tab 22 and the housing 1 respectively.

For example, referring to FIG. 1 and FIG. 2, the cell 100 further includes a current collecting disk 3. The current collecting disk 3 is sandwiched between the housing 1 and an end portion of the pole core 2. The first tab 21 is located on a side of the second tab 22 close to a center of the pole core 2. An avoiding through hole 31 is provided in a middle portion of the current collecting disk 3. Two ends of the avoiding through hole 31 are respectively opposite to the battery post 13 and the first tab 21. The first tab 21 passes through the avoiding through hole 31 in an insulation manner and is connected to the battery post 13 through welding. For example, the first tab 21 may be connected to the battery post 13 through ultrasonic welding, so that the first tab 21 is conductively connected to the battery post 13. It may be understood that, the first tab 21 needs to pass through the avoiding through hole 31 in the insulation manner, to avoid short-circuiting between the first tab 21 and the current collecting disk 3. For example, the first tab 21 is not in contact with an inner wall of the avoiding through hole 31, or an insulating member is arranged between the first tab 21 and the avoiding through hole 31. The current collecting disk 3 faces the second tab 22 and is connected to the second tab 22 through welding, and the current collecting disk 3 may be connected to an end surface of the housing 1 through welding, so that the second tab 22 may be conductively connected to the housing 1 through the current collecting disk 3. It should be noted that the housing 1 and the current collecting disk 3 may be welded in a keyhole welding manner.

It may be understood that the second tab 22 is arranged on a side of the first tab 21 facing away from the center of the pole core 2, and the battery post 13 is not conductively connected to the second tab 22 at any mounting angle. This can avoid a short circuit, help reduce assembly difficulty of the pole core 2, and improve a yield rate of the cell 100. In addition, the first tab 21 is set to be directly conductively connected to the battery post 13, and the second tab 22 is set to be conductively connected to the housing 1 through the current collecting disk 3. This helps reduce a quantity of parts, reduce mounting difficulty, and improve the yield rate of the cell 100.

In some embodiments of the present disclosure, a connecting protrusion 32 protruding toward the housing 1 is arranged on a first side wall 3a of the current collecting disk 3, and the connecting protrusion 32 is conductively connected to the housing 1. For example, referring to FIG. 1 to FIG. 4, a side wall of the current collecting disk 3 facing the housing 1 may be set to a first side wall 3a. A connecting protrusion 32 is arranged on the first side wall 3a. The connecting protrusion 32 is constructed as a ring structure. The connecting protrusion 32 extends in a circumferential direction of the current collecting disk 3 and protrudes toward the housing 1. After the pole core 2 is mounted in the accommodating cavity, the connecting protrusion 32 may abut against an inner wall of the housing 1 and is connected to the housing 1 through welding, so as to implement a conductive connection between the current collecting disk 3 and the housing 1. In this way, large-area contact between the current collecting disk 3 and the housing 1 can be avoided, thereby improving connection stability between the current collecting disk 3 and the housing 1.

Further, as shown in FIG. 2, the connecting protrusion 32 may extend along an edge of an inner side of the current collecting disk 3. This helps simplify a structure of the current collecting disk 3 and reduce processing difficulty of the current collecting disk 3.

In an actual arrangement, as shown in FIG. 1 and FIG. 2, a welding groove 111 may be provided on a side of the housing 1 facing away from the accommodating cavity, the welding groove 111 is constructed as a ring shape, and the welding groove 111 faces the connecting protrusion 32. After the pole core 2 is mounted in the accommodating cavity, keyhole welding may be performed on the current collecting disk 3 at the welding groove 111, to implement a connection between the housing 1 and the current collecting disk 3.

In some embodiments of the present disclosure, an avoiding space 4 is provided between the first side wall 3a of the current collecting disk 3 and an inner wall of the housing 1, a through hole 33 is provided on the current collecting disk 3, and the second tab 22 extends into the avoiding space 4 through the through hole 33 and is conductively connected to the first side wall 3 a.

For example, referring to FIG. 1 and FIG. 2, the first side wall 3a of the current collecting disk 3 and the inner wall of the housing 1 are spaced apart from each other and jointly define an avoiding space 4. A through hole 33 is provided on the current collecting disk 3 corresponding to the avoiding space 4, and the through hole 33 matches the second tab 22, so that the second tab 22 may extend from a side of the current collecting disk 3 facing the pole core 2 into the avoiding space 4 through the through hole 33. The second tab 22 is adapted to fall inward or outward in a radial direction onto the first side wall 3a of the current collecting disk 3 and is connected to the current collecting disk 3 through welding, to implement a conductive connection between the current collecting disk 3 and the second tab 22. Through the foregoing arrangement, welding difficulty between the current collecting disk 3 and the second tab 22 can be reduced, thereby facilitating welding quality detection, helping avoid false welding and leaky welding, and improving quality of the cell 100.

In some embodiments of the present disclosure, a part of the second tab 22 conductively connected to the first side wall 3a is located on a side of the through hole 33 facing away from the center of the pole core 2. For example, referring to FIG. 4, the second tab 22 may be set to fall outward in a radial direction, so that a part of the second tab 22 conductively connected to the first side wall 3a is located on a side of the through hole 33 facing away from the center of the pole core 2, to avoid a case that the second tab 22 falls inward and is in contact with the first tab 21, and the extended position of the second tab 22 is close to the middle portion of the pole core 2, to shorten a current path. Therefore, practicality of the cell 100 can be improved.

In some embodiments of the present disclosure, a radius of the pole core 2 is R, the radius R of the pole core 2 may usually range from 15 mm to 40 mm, a thickness of the current collecting disk 3 is D, an extension length of the second tab 22 is L2, and L2 satisfies: 3.5 mm≤L2≤R-r2+D. For example, referring to FIG. 1 and FIG. 2, the radius of the second circle in which the extended position of the second tab 22 is located is set to r2, a radius of the pole core 2 is set to R, a thickness of the current collecting disk 3 is set to D, an extension length of the second tab 22 is set to L2, and L2 satisfies: 3.5 mm≤L2≤R-r2+D. In other words, the extension length L2 of the second tab 22 is greater than or equal to 3.5 mm, so that a sufficient contact area can be provided between the second tab 22 and the current collecting disk 3. This helps reduce an overall resistance of the cell 100. In addition, the extension length L2 of the second tab 22 is less than or equal to a sum of a difference between the radius R of the pole core 2 and the radius of the second circle and the thickness of the current collecting disk 3, so that a case that the second tab 22 extends to an outer side of the pole core 2 in a radial direction after falling can be avoided, to prevent the second tab 22 from interfering with a mounting process. Therefore, reliability of the cell 100 is improved.

In some embodiments of the present disclosure, a radius of the pole core 2 may be set to R, a radius of the winding center hole 23 may be set to r, and r satisfies: r2≤R-2r. In other words, the radius of the second circle may be set to be less than or equal to a difference between the radius of the pole core 2 and two times the radius of the winding center hole 23, so that an excessively large distance between the second tab 22 and the winding center hole 23 can be avoided. This helps shorten a current path and improve the overcurrent capability of the cell 100.

In some embodiments of the present disclosure, a protruding height of the connecting protrusion 32 may be f, and f satisfies: f≥H2+0.5 mm. For example, referring to FIG. 1, a protruding height of the connecting protrusion 32 may be set to f, a thickness of the second tab 22 may be set to h, and f satisfies: f≥h+0.5 mm. In other words, a difference between the protruding height of the connecting protrusion 32 and the thickness of the second tab 22 is greater than or equal to 0.5 mm, for example, 0.6 mm, 0.8 mm, or 1 mm. This is not limited in the present disclosure. In this way, after the second tab 22 falls onto the first side wall 3a, a side of the second tab 22 facing the housing 1 may be spaced apart from the housing 1, to avoid poor contact between the connecting protrusion 32 and the housing 1, and ensure connection reliability between the connecting protrusion 32 and the housing 1. Therefore, overall quality of the cell 100 is improved.

In some embodiments of the present disclosure, as shown in FIG. 2, the connecting protrusion 32 may be constructed as a ring shape or a rectangular shape, and a thickness of the connecting protrusion 32 may be set to 2 mm to 3 mm, for example, 2.1 mm, 2.2 mm, or 2.3 mm. The thickness herein is a wall thickness of the connecting protrusion 32 in a direction from a center of the current collecting disk 3 to an outer side of the current collecting disk 3. Through the foregoing arrangement, the connecting protrusion 32 can have sufficient structural strength, which helps improve reliability of the current collecting disk 3, and a sufficient contact area can be provided between the connecting protrusion 32 and the housing 1, which helps improve connection stability between the connecting protrusion 32 and the housing 1, reduces a resistance of the cell 100, and improves the reliability of the cell 100.

In some embodiments of the present disclosure, a radius of the avoiding through hole 31 may be set to r3, and r3 satisfies: r1+g≤r3≤r2-k. 2 mm≤g≤3 mm, and 2 mm≤k≤5 mm. For example, the parameter g may be 2.5 mm, so that the radius r3 of the avoiding through hole 31 is greater than or equal to a sum of the radius r1 of the first circle and 2.5 mm, and a sufficient distance may be maintained between an inner wall of the avoiding through hole 31 and the first tab 21, to avoid a conductive connection between the first tab 21 and the current collecting disk 3. In addition, the parameter k may be 3.5 mm, so that the radius r3 of the avoiding through hole 31 is less than or equal to a difference between the radius r2 of the second circle and 3.5 mm, so that a sufficient distance is provided between an edge of the avoiding through hole 31 and the second tab 22, to reserve a sufficient processing space for the through hole 33. Therefore, reliability of the cell 100 can be improved.

Further, as shown in FIG. 1 and FIG. 2, the cell 100 further includes an insulating spacer 5. The insulating spacer 5 is sandwiched between the end portion of the pole core 2 and the housing 1, and the insulating spacer 5 is configured to insulate and separate the first tab 21 from the current collecting disk 3, to avoid a conductive connection between the first tab 21 and the second tab 22. Therefore, reliability of the cell 100 can be improved.

In some embodiments of the present disclosure, a plurality of first tabs 21 are arranged at intervals in a circumferential direction of the pole core 2. A plurality of second tabs 22 are arranged at intervals in the circumferential direction of the pole core 2. For example, referring to FIG. 1, FIG. 3, and FIG. 4, a plurality of first tabs 21 may be arranged. All extended positions of the plurality of first tabs 21 are located in the first circle, and the plurality of first tabs 21 are arranged at intervals along the first circle and are configured to conductively connect to the battery post 13 together. In addition, a plurality of second tabs 22 may be arranged. All extended positions of the plurality of second tabs 22 are located in the second circle, and the plurality of first tabs 21 are arranged at intervals along the second circle and are configured to conductively connect to the current collecting disk 3 separately. Through the foregoing arrangement, a resistance of the cell 100 can be reduced, thereby improving the practicality of the cell 100.

In some embodiments of the present disclosure, a radian of each first tab 21 ranges from 0.35 rad to 0.45 rad; and/or a radian of each second tab 22 ranges from 0.35 rad to 0.45 rad.

For example, as shown in FIG. 1 to FIG. 4, a radian of each first tab 21 may be set to range from 0.35 rad to 0.45 rad, for example, the radian of the first tab 21 may be 0.37 rad. Alternatively, the radian of the first tab 21 may be 0.40 rad. Alternatively, the radian of the first tab 21 may be 0.43 rad. This is not limited in the present disclosure. In addition, a radian of each second tab 22 may be set to range from 0.35 rad to 0.45 rad, for example, the radian of the second tab 22 may be 0.37 rad. Alternatively, the radian of the second tab 22 may be 0.40 rad. Alternatively, the radian of the second tab 22 may be 0.43 rad. This is not limited in the present disclosure.

Through the foregoing arrangement, the first tab 21 and the second tab 22 can have appropriate radians, to avoid a case that welding of the first tab 21 and the second tab 22 is difficult due to excessively small radians, and avoid tearing of the first tab 21 and the second tab 22 during falling caused by excessively large radians, so as to improve the design rationality of the cell 100.

Specifically, manufacturing steps of the cell 100 are as follows.

In a first step, laser die cutting is first performed on a positive electrode plate and a negative electrode plate of the cell 100, to process tab parts on same sides of the positive electrode plate and the negative electrode plate respectively. Sizes of the tab parts are obtained through calculation according to the first tab 21, the second tab 22, a membrane, and an effect that needs to be presented after actual winding.

In a second step, the positive electrode plate, the negative electrode plate, and the membrane are wound together to form the pole core 2. The positive electrode plate and the negative electrode plate are separated by the membrane, the tab part of the positive electrode plate and the tab part of the negative electrode plate are located at a same end of the pole core 2, and the tab parts are wound into multi-layer cylindrical shapes. It should be noted that the membrane protrudes from two ends of the pole core 2 to completely separate the positive electrode plate from the negative electrode plate.

In a third step, the tab parts are processed by using a hardware cutter or through laser die cutting, to respectively process a plurality of first tabs 21 and a plurality of second tabs 22 on the same end of the pole core 2. The plurality of first tabs 21 are evenly distributed in a ring shape, the second tab 22 is located on a side of the first tab 21 facing away from a center of the pole core 2, and the plurality of second tabs 22 are evenly distributed in a ring shape. It should be noted that the first tab 21 and the second tab 22 each include a plurality of layers distributed in a radial direction.

In a fourth step, ultrasonic pre-welding is separately performed on the first tab 21 and the second tab 22, to form the first tab 21 and the second tab 22 into an integral structure. The plurality of first tabs 21 are stacked in sequence after falling toward the winding center hole 23 in a radial direction. The second tab 22 passes through the through hole 33 and extends to a side of the current collecting disk 3 facing away from the pole core 2. The second tab 22 may fall outward onto the first side wall 3a of the current collecting disk 3 in the radial direction, and then the second tab 22 is welded to the current collecting disk 3 through laser with relatively low intensity. Then, the insulating spacer 5 may be placed on the end surface of the pole core 2, and then the pole core 2 is mounted into the accommodating cavity from the open end, so that the first tab 21 abuts against the battery post 13, and a welding head needle is placed from the other end of the pole core 2 through the winding center hole 23. The welding head needle is configured to perform ultrasonic torque welding on a welding position between the first tab 21 and the battery post 13, to weld the first tab 21 and the battery post 13 together.

In a fifth step, the cover plate part 12 and the main body part 11 are assembled, after the assembly is completed, laser sealing welding is performed on a connection position between the cover plate part 12 and the main body part 11 in a circumferential direction of the cover plate part 12, and keyhole welding is performed on the housing 1 and the current collecting disk 3 through a welding groove 111. Therefore, processing of the cell 100 can be completed.

The present disclosure further provides a battery pack.

The battery pack according to the embodiments of the present disclosure includes: the cell 100 according to any one of the foregoing embodiments and a housing. The cell 100 is arranged in the housing, and the housing is configured to protect the cell 100, so that direct impact on the cell 100 when the battery pack collides can be avoided.

According to the battery pack in the embodiments of the present disclosure, the cell 100 is set to satisfy the above relational expression, so that the cell 100 can have a good overcurrent capability, and heat collection caused by an insufficient flow area is avoided, thereby improving service life of the cell 100 and improving practicality of the battery pack.

The present disclosure further provides a power consumption device.

The power consumption device according to the embodiments of the present disclosure includes: the battery pack according to any one of the foregoing embodiments or the cell 100 according to any one of the foregoing embodiments, and a power consumption body. The battery pack or the cell 100 is arranged in the power consumption body. For example, the power consumption body may be a new energy vehicle, a hybrid vehicle, an aircraft, an energy storage cabinet, or the like.

According to the power consumption device in the embodiments of the present disclosure, the cell 100 is set to satisfy the above relational expression, so that the cell 100 can have a good overcurrent capability, and heat collection caused by an insufficient flow area is avoided, thereby improving the service life of the cell 100, improving practicality of the battery pack, and improving overall performance of the power consumption device.

In the descriptions of the present disclosure, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial direction", "radial direction", and "circumferential direction" are orientations or position relationships shown based on the accompanying drawings, and are merely used for describing the present disclosure and simplifying the description, rather than indicating or implying that the apparatus or element should have a particular orientation or be constructed and operated in a particular orientation, and therefore, should not be construed as a limitation on the present disclosure.

In the descriptions of the present disclosure, a "first feature" or a "second feature " may include one or more features.

In the descriptions of the present disclosure, "a plurality of" means two or more.

In the descriptions of the present disclosure, a first feature is "on" or "under" a second feature may include that the first and second features are in direct contact, or may include that the first and second features are not in direct contact but in contact by using other features therebetween.

In the descriptions of the present disclosure, that the first feature is "above" the second feature includes that the first feature is right above the second feature and is not right above the second feature, or merely represents that a horizontal height of the first feature is higher than the second feature.

In the descriptions of this specification, the descriptions of the reference terms such as "an embodiment", "some embodiments", "exemplary embodiments", "example", "specific example", or "some examples" mean that the specific features, structures, materials or characteristics described with reference to the embodiment or example are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present disclosure are already shown and described above, a person of ordinary skill in the art is to be understood that various changes, modifications, replacements, and variations may be made to the embodiments without departing from the principles and spirit of the present disclosure, and the scope of the present disclosure is defined by the appended claims and their equivalents.

## Claims

1. A cell (100), comprising:
a housing (1), an accommodating cavity being formed in the housing (1), a battery post (13) being arranged on an end of the housing (1), and the battery post (13) being insulated from the housing (1); and
a pole core (2), mounted in the accommodating cavity, a first tab (21) and a second tab (22) being arranged on an end of the pole core (2) corresponding to the battery post (13), the first tab (21) being conductively connected to the battery post (13), the second tab (22) being electrically connected to the housing (1), a thickness of the first tab (21) being H1, a thickness of the second tab (22) being H2, a circle in which an extended position of the first tab (21) is located being a first circle, a circle in which an extended position of the second tab (22) is located being a second circle, the first circle and the second circle being concentrically arranged, a radius of the first circle being r1, a radius of the second circle being r2, and the cell (100) satisfying: π*(H1*r1+H2*r2)≥6.6 mm².

2. The cell (100) according to claim 1, wherein the first tab (21) is a multi-layer structural member, a thickness of a single layer of the first tab (21) is e1, a quantity of layers of the first tab (21) is d1, and the thickness H1 of the first tab (21) is e1*d1; and/or
the second tab (22) is a multi-layer structural member, a thickness of a single layer of the second tab (22) is e2, a quantity of layers of the second tab (22) is d2, and the thickness H2 of the second tab (21) is e2*d2.

3. The cell (100) according to claim 2, wherein d1 ranges from 5 to 30, and/or d2 ranges from 5 to 30.

4. The cell (100) according to claim 1, wherein when the first tab (21) is a negative electrode, the cell (100) satisfies: π*H1*r1≥2.6 mm²; or
when the first tab (21) is a positive electrode, the cell (100) satisfies: π*H1*r1≥4 mm².

5. The cell (100) according to claim 1, wherein a winding center hole (23) is formed in the pole core (2), the extended position of the first tab (21) is located on an outer side of the winding center hole (23) in a radial direction, and the first tab (21) at least partially covers the winding center hole (23, preferably
wherein a radius of the winding center hole (23) is r, an extension length of the first tab (21) is L1, and L1 satisfies: r1-0.5r<L1<r+r1; or
wherein a radius of the winding center hole (23) is r, and r satisfies: r1≥2r.

6. The cell (100) according to any one of claims 1 to 5, further comprising: a current collecting disk (3), the current collecting disk (3) being sandwiched between the housing (1) and an end portion of the pole core (2), the first tab (21) being located on aside of the second tab (22) close to a center of the pole core (2), an avoiding through hole (31) being formed in a middle portion of the current collecting disk (3), the first tab (21) passing through the avoiding through hole (31) and being conductively connected to the battery post (13), and the current collecting disk (3) being conductively connected to the second tab (22) and the housing (1) respectively.

7. The cell (100) according to claim 6, wherein a connecting protrusion (32) protruding toward the housing (1) is arranged on a first side wall (3a) of the current collecting disk (3), and the connecting protrusion (32) is conductively connected to the housing (1).

8. The cell (100) according to claim 7, wherein an avoiding space (4) is provided between the first side wall (3a) of the current collecting disk (3) and an inner wall of the housing (1), a through hole (33) is provided on the current collecting disk (3), and the second tab (22) extends into the avoiding space (4) through the through hole (33) and is conductively connected to the first side wall (3a).

9. The cell (100) according to claim 8, wherein a part of the second tab (22) conductively connected to the first side wall (3a) is located on a side of the through hole (33) facing away from the center of the pole core (2).

10. The cell (100) according to claim 9, wherein a radius of the pole core (2) is R, a thickness of the current collecting disk (3) is D, an extension length of the second tab (22) is L2, and L2 satisfies: 3.5 mm≤L2≤R-r2+D.

11. The cell (100) according to claim 8, wherein a protruding height of the connecting protrusion (32) is f, and f satisfies: f≥H2+0.5 mm; or
wherein a thickness of the connecting protrusion (32) ranges from 2 mm to 3 mm.

12. The cell (100) according to claim 6, further comprising: an insulating spacer (5), the insulating spacer (5) being arranged between the first tab (21) and the avoiding through hole (31) to insulate and separate the first tab (21) from the current collecting disk (3; or
wherein a radius of the avoiding through hole (31) is r3, and r3 satisfies: r1+g≤r3≤r2-k, wherein 2 mm≤g≤3 mm, and 2 mm≤k≤5 mm.

13. The cell (100) according to claim 1, wherein a plurality of first tabs (21) are arranged at intervals in a circumferential direction of the pole core (2), and/or a plurality of second tabs (22) are arranged at intervals in the circumferential direction of the pole core (2, preferably
wherein a radian of each first tab (21) ranges from 0.35 rad to 0.45 rad; and/or
a radian of each second tab (22) ranges from 0.35 rad to 0.45 rad.

14. A battery pack, comprising: the cell (100) according to any one of claims 1 to 13 and a housing, the cell (100) being arranged in the housing.

15. A power consumption device, comprising the battery pack according to claim 14 or the cell (100) according to any one of claims 1 to 13, and a power consumption body, the battery pack or the cell (100) being arranged in the power consumption body.
